# EUROPEAN PATENT APPLICATION

(11) **EP 4 782 171 A1**
(43) Date of publication of application: **29.07.2026**
(21) Application number: 24867849.2
(22) Date of filing: 10.06.2024
(51) Int. Cl.: B29B 13/06, F26B 3/04, F26B 17/10, F26B 21/00

(54) **DRYING DEVICE FOR SYNTHETIC RESIN MOLDING MATERIAL**

(30) Priority: 19.09.2023 JP 2023150716
(71) Applicant: Osaka Reiken Co., Ltd., Higashiosaka-shi, Osaka 578-0982 (JP)
(72) Inventor: KANAOKA, Yoshiki, Higashiosaka-shi, Osaka 578-0982 (JP); NAGATSUNA, Yasuyuki, Higashiosaka-shi, Osaka 578-0982 (JP)
(74) Representative: Marks & Clerk LLP
(86) International application number: PCT/JP2024/020959
(87) International publication number: WO 2025/062762

(57) **Abstract**

The present disclosure aims to provide a drying device for synthetic resin molding materials that makes effective use of thermal energy and dries synthetic resin molding materials, such as resin pellets, in a shorter time in a temperature range that is less likely to cause changes in physical properties of the synthetic resin molding materials. A drying device 1 includes a drying hopper 2, generation units 8 and 7A configured to generate dry air for drying synthetic resin molding materials in the drying hopper 2, a dry-air supply path L1 for supplying the dry air to the drying hopper 2, an exhaust-air discharge path L2 for discharging from the drying hopper 2 the dry air used to dry the synthetic resin molding materials in the drying hopper 2, and an exhaust-air supply path L7 for supplying a portion of exhaust air flowing through the exhaust-air flow path L2 to the drying hopper 2, wherein the drying hopper 2 is configured such that the dry air from the dry-air supply path L1 is introduced into its lower portion, and the exhaust air from the exhaust-air supply path L7 is introduced into its upper portion.

## Description

### Technical Field

The present disclosure relates to a drying device for removing moisture from synthetic resin molding materials, such as resin pellets.

### Background Art

Synthetic resin molding materials are typically processed into pellets and, in that state, are supplied to a resin molding machine, such as an injection molding machine. Resin pellets absorb moisture from the atmosphere. With a high moisture content, hydrolysis will occur during the melt-kneading process, which causes a decrease in the strength and impact resistance of molded articles, significantly deteriorating the quality of the molded articles. Additionally, defects in the appearance of the molded articles are also caused. Therefore, moisture is removed from the resin pellets before the resin pellets are supplied to an injection molding machine or the like.

Examples of conventionally known means to remove the moisture in resin pellets include a drying device configured to supply high-temperature and low-dew-point dry air into a drying hopper in which resin pellets are accommodated and to bring the dry air into contact with the resin pellets in the drying hopper. In the drying device, the resin pellets in the drying hopper are heated by the dry air, whereby the moisture adhered on the surface and contained inside the resin pellets evaporates. The evaporated moisture is taken away by the dry air, whereby the moisture is removed from the resin pellets (for example, see PLT 1).

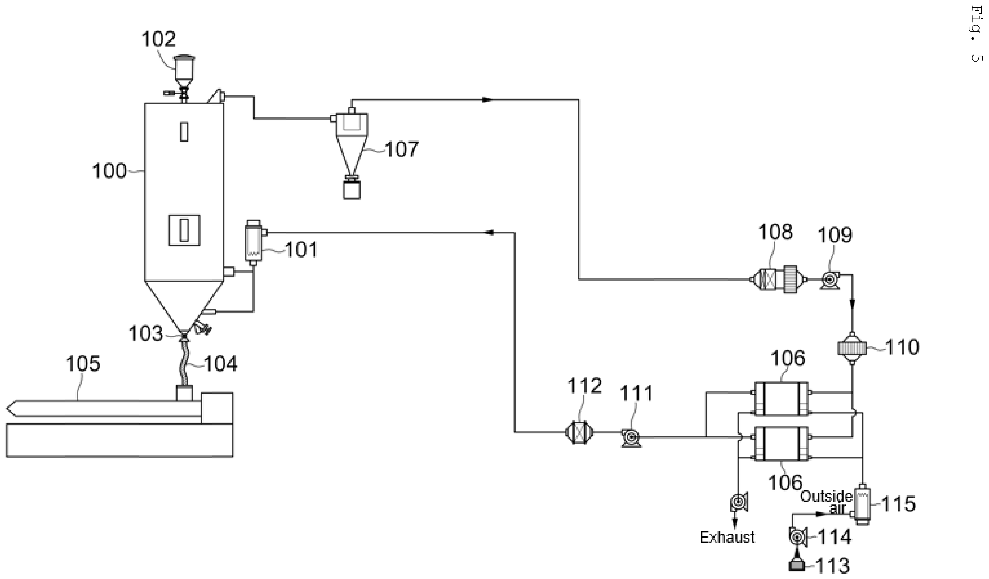

Regarding the drying device described above, Fig. 5 shows a schematic diagram of a conventional drying device. Dry air is generated by heating low-dew-point air to a high temperature in a heater 101, and supplied to a drying hopper 100. Resin pellets are supplied to the drying hopper 100 from a hopper loader 102. The resin pellets in the drying hopper 100 are heated by the dry air and thus dried. The dried resin pellets are discharged from the drying hopper 100 upon opening of a solenoid valve 103 and supplied to a resin molding machine 105 through a transport pipe 104.

The temperature of the dry air used to dry the resin pellets in the drying hopper 100 decreases as the heat is taken away by the resin pellets, and the moisture of the dry air increases as the dry air removes the moisture from the resin pellets. Then, the dry air is discharged from the drying hopper 100. After foreign matter contained in the dry air (exhaust air) discharged from the drying hopper 100 is removed in a dust collector 107, the dry air is cooled by a cooler 108, compressed by a blower 109, cooled again by a cooler 110, and then supplied to dehumidifiers 106, whereby the dry air becomes low-dew-point air, which is used again as dry air for drying the resin pellets in the drying hopper 100.

### Citation List

### Patent Literature

PTL 1: JP7-19770Y

### Summary of Invention

### Technical Problem

Generally, the coolers 108 and 110 that cool the exhaust air are water-cooled coolers. The water-cooled coolers can efficiently cool exhaust air with cooling water, and the cooling water that has collected thermal energy of the exhaust air by cooling the exhaust air is cooled in a cooling tower. Thus, although the exhaust air discharged from the drying hopper 100 has a high temperature and thermal energy, the thermal energy of the exhaust air cannot be effectively utilized in conventional drying devices.

When the dry air temperature is higher, the drying time for resin pellets is shorter, and the temperature of the dried resin pellets is higher. This makes it possible to efficiently supply the dried resin pellets at a high temperature to a resin molding machine such as an injection molding machine. However, as the dry air temperature increases, the temperature of the resin pellets also increases, making the resin pellets susceptible to changes in physical properties due to decomposition (hydrolysis, oxidative decomposition, thermal decomposition, etc.) and deterioration. Thus, if some abnormality occurs in the drying device while drying the resin pellets, and the resin pellets remain in the drying hopper at a high temperature for longer than a predetermined drying time, the physical properties of the resin pellets may change. In contrast, if the dry air temperature is low, the drying time of the resin pellets will be long.

The present disclosure was made in light of the above circumstances and aims to provide a drying device for synthetic resin molding materials, such as resin pellets, that makes effective use of thermal energy and dries the synthetic resin molding materials in a shorter time in a temperature range that is less likely to cause changes in physical properties of the synthetic resin molding materials.

### Solution to Problem

In order to solve the above problem, the drying device of the present disclosure encompasses a drying device described in Item 1 below as the subject matter.

Item 1. A drying device comprising:
a drying hopper configured to accommodate synthetic resin molding materials introduced from an upper portion of the drying hopper and to discharge the synthetic resin materials from a lower portion of the drying hopper;
a generation unit configured to generate dry air for drying the synthetic resin molding materials in the drying hopper;
a dry-air supply path for supplying the dry air to the drying hopper;
an exhaust-air discharge path for transferring exhaust air discharged from the drying hopper after the synthetic resin molding materials are dried in in the drying hopper;
an exhaust-air supply path for supplying a portion of the exhaust air flowing through the exhaust-air flow path to the drying hopper; and
a heater provided at the exhaust-air discharge path and configured to heat the exhaust air to be supplied to the drying hopper, wherein
the drying hopper comprises a dry-air introduction unit in the lower portion thereof, the dry-air introduction unit being configured to introduce the dry air from the dry-air supply path, and the drying hopper also comprises an exhaust-air introduction unit in the upper portion thereof, the exhaust-air introduction unit being configured to introduce the exhaust air from the exhaust-air supply path, and
in the drying hopper, the exhaust-air introduction unit is located above the dry-air introduction unit.

As a preferred embodiment of the drying device according to Item 1 above, the drying device of the present disclosure encompasses a drying device described in Item 2 below.

Item 2. The drying device according to Item 1, wherein the generation unit comprises a dehumidifier configured to generate low-dew-point air and a heater configured to convert the low-dew-point air into the dry air by heating.

As a preferred embodiment of the drying devices according to Items 1 and 2, the drying device of the present disclosure encompasses a drying device described in Item 3 below.

Item 3. The drying device according to Item 1 or Item 2, wherein the temperature of the dry air to be supplied to the drying hopper is 110°C or higher and 140°C or lower.

### Advantageous Effects of Invention

The drying device of the present disclosure makes effective use of thermal energy and dries synthetic resin molding materials, such as resin pellets, in a shorter time in a temperature range that is less likely to cause changes in physical properties of the synthetic resin molding materials.

### Brief Description of Drawings

Fig. 1 is a schematic diagram of a drying device according to an embodiment of the present disclosure.
Fig. 2 is a schematic diagram of a drying hopper.
Fig. 3 is a schematic diagram of a drying device according to another embodiment of the present disclosure.
Fig. 4 is a schematic diagram of a drying device according to still another embodiment of the present disclosure.
Fig. 5 is a schematic diagram of a conventional drying device.

### Description of Embodiments

The present disclosure relates to a drying device for removing moisture from synthetic resin molding materials used as raw materials in the production of plastic molded articles by injection molding, extrusion molding, or the like. Synthetic resin molding materials are hygroscopic and absorb moisture from the atmosphere. If synthetic resin molding materials with a high moisture content are supplied to a resin molding machine, hydrolysis will occur during the melt-kneading process, which causes a decrease in the strength and impact resistance of molded articles, significantly deteriorating the quality of the molded articles. Additionally, defects in the appearance of the molded articles are also caused. Therefore, removal of moisture from the synthetic resin molding materials is necessary before the synthetic resin molding materials are supplied to a resin molding machine. The drying device of the present disclosure is a technology for drying synthetic resin molding materials to remove moisture from the synthetic resin molding materials.

The synthetic resin molding materials may have any shape and may be in the form of, for example, powder, granules, or pellets. In the embodiments described below, the synthetic resin molding materials are in the form of resin pellets; however, the synthetic resin molding materials are not limited to resin pellets. The synthetic resin molding materials are made from thermoplastic resin. Examples of thermoplastic resins include, but are not limited to, polyester such as polyethylene terephthalate, polyethylene, polypropylene, polystyrene, ABS, and polyamide.

The following describes an embodiment of the drying device of the present disclosure in detail, with reference to the drawings.

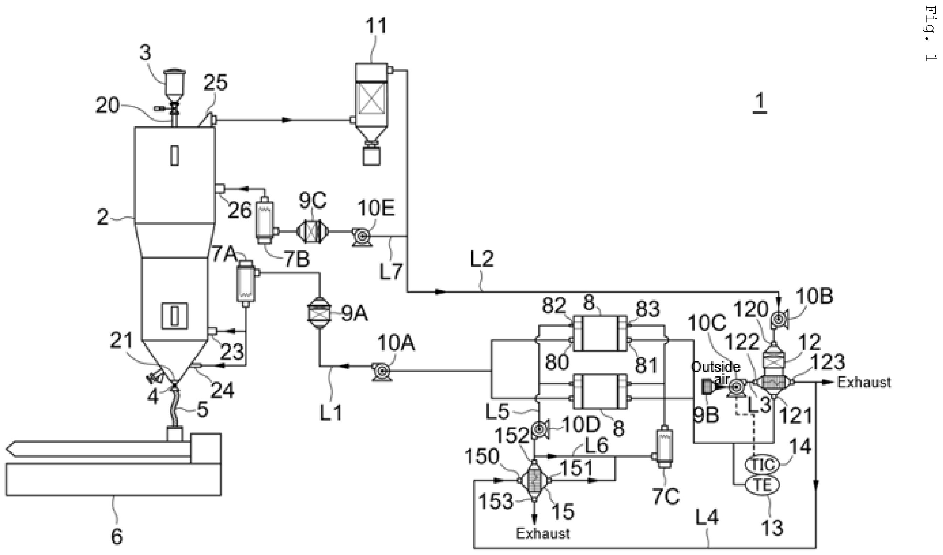

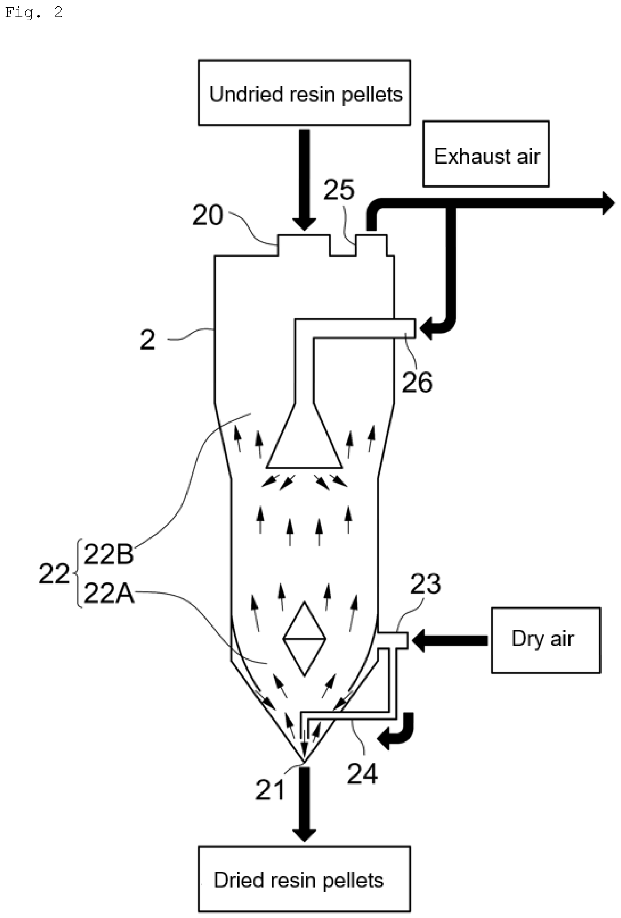

As shown in Fig. 1, a drying device 1 includes a drying hopper 2 configured to accommodate resin pellets. As shown in Fig. 2, the drying hopper 2 includes an accommodation space 22 capable of accommodating the resin pellets inside. The resin pellets are dried while being accommodated in the drying hopper 2.

As shown in Fig. 1 and Fig. 2, the drying hopper 2 includes an introduction unit 20 for resin pellets at its upper portion. For example, a hopper loader 3 is provided above the drying hopper 2. Undried resin pellets are conveyed from a raw material tank (not shown) to the hopper loader 3. The undried resin pellets from the hopper loader 3 are introduced into the drying hopper 2 through the introduction unit 20.

As shown in Fig. 1 and Fig. 2, in a lower portion of the drying hopper 2, a lower end is partially formed in a cone or quadrilateral pyramid shape. The drying hopper 2 includes a discharge unit 21 for resin pellets at the lower end of the drying hopper 2. The resin pellets in the drying hopper 2 are discharged from the drying hopper 2 through the discharge unit 21 upon opening of a solenoid valve 4, for example, and transported to a resin molding machine 6 through a transport pipe 5. Any known means can be used to transport and stop transporting the resin pellets from the drying hopper 2 to the resin molding machine 6.

As shown in Fig. 1 and Fig. 2, a boundary portion between the upper portion and the lower portion of the drying hopper 2 is tapered so as to have a downwardly constricted shape. The accommodation space 22 in the drying hopper 2 is divided into a first region 22A in the lower portion and a second region 22B in the upper portion. The lower portion of the drying hopper 2 includes at least one introduction unit 23 or introduction unit 24 for introducing, into the drying hopper 2, dry air for drying the resin pellets in the drying hopper 2. Preferably, the tip of the lower second introduction unit 24 extends close to the lower end of the drying hopper 2.

Dry air is introduced into the lower portion of the drying hopper 2 through the upper first introduction unit 23 and also introduced into a lowest portion of the drying hopper 2 through the lower second introduction unit 24. When the dry air comes into contact with the resin pellets in the drying hopper 2, the resin pellets are heated and their moisture content is reduced. When the dry air moves upward in the drying hopper 2, mainly, the resin pellets accommodated in the lower portion of the drying hopper 2 are dried. Since the dry air is introduced into the lowest portion of the lowest portion via the second introduction unit 24, the temperature drop of the resin pellets accumulated in the lower portion of the drying hopper 2 is suppressed. The humidity of the dry air increases as it takes away the moisture from the resin pellets, and the temperature of the dry air decreases as its heat is taken away by the resin pellets.

As shown in Fig. 1 and Fig. 2, the drying hopper 2 includes an exhaust unit 25 at the upper portion, the exhaust unit 25 being configured to discharge the dry air used to dry the resin pellets to the outside of the drying hopper 2. The drying hopper 2 also includes an introduction unit 26 in the upper portion, specifically at a position below the exhaust unit 25, the introduction unit 26 being configured to introduce a portion of the dry air (exhaust air) discharged to the outside of the drying hopper 2 into the drying hopper 2. The introduction unit 26 for exhaust air is located above the introduction units 23 and 24 for dry air. Preferably, a tip of the introduction unit 26 for exhaust air extends to the boundary between the lower portion and the upper portion of the drying hopper 2.

The shape and structure of the drying hopper 2 are not particularly limited, and a drying hopper having any conventionally known shape and structure may be used.

As shown in Fig. 1, the drying device 1 includes a generation unit configured to generate dry air for drying synthetic resin molding materials in the drying hopper 2. In the present embodiment, the generation unit includes at least one dehumidifier 8 (two in the present embodiment) configured to generate low-dew-point air, and a first heater 7A configured to convert the low-dew-point air into dry air by heating. The dehumidifiers 8 and the first heater 7A are described later.

As shown in Fig. 1, the drying device 1 includes a dry-air supply path L1 for supplying dry air to the drying hopper 2. In the present embodiment, one end of the dry-air supply path L1 branches into two. One branch at this end of the dry-air supply path L1 is connected to the first introduction unit 23 of the drying hopper 2. The other branch at this end of the dry-air supply path L1 is connected to the second introduction unit 24 of the drying hopper 2. Dry air is supplied to the drying hopper 2 from the introduction units 23 and 24 through the dry-air supply path L1.

In the present embodiment, the other end of the dry-air supply path L1 branches into two. One branch at the other end of the dry-air supply path L1 is connected to an exhaust unit 80 for low-dew-point air, which is provided in one dehumidifier 8. The other branch at the other end of the dry-air supply path L1 is connected to the exhaust unit 80 for low-dew-point air, which is provided in the other dehumidifier 8. The low-dew-point air generated in the dehumidifiers 8 is supplied to the first heater 7A from the exhaust unit 80 provided to the dehumidifier 8 through the dry-air supply path L1.

In the dry-air supply path L1, the first heater 7A, the first filter device 9A, and the first blower 10A are arranged in sequence, with the first filter device 9A being closest to the drying hopper 2, between the drying hopper 2 and the dehumidifiers 8. The low-dew-point air discharged from the dehumidifiers 8 passes through the first blower 10A, the first filter device 9, and the first heater 7A, in this order.

The first blower 10A draws in low-dew-point air from an inlet port, compresses the low-dew-point air, and then discharges the compressed low-dew-point air from an outlet port. The first filter device 9A removes foreign matter from the low-dew-point air. The first heater 7A converts the low-dew-point air into high-temperature and low-dew-point dry air by heating. The first heater 7A heats the low-dew-point air so that the temperature of the low-dew-point air reaches, for example, 110°C or higher and 180°C or lower, preferably 110°C or higher and 140°C or lower. The first heater 7A, the first filter device 9A, and the first blower 10A may be conventionally known ones.

As shown in Fig. 1, the drying device 1 includes an exhaust-air discharge path L2 for discharging the dry air that was used to dry the resin pellets in the drying hopper 2. Exhaust air is supplied from the drying hopper 2 to the dehumidifiers 8 vie the exhaust-air discharge path L2.

One end of the exhaust-air discharge path L2 is connected to the exhaust unit 25 at the upper portion of the drying hopper 2. In the present embodiment, the other end of the exhaust-air discharge path L2 branches into two. One branch at the other end of the exhaust-air discharge path L2 is connected to an introduction unit 81 for exhaust air, which is provided in one dehumidifier 8. The other branch at the other end of the exhaust-air discharge path L2 is connected to another introduction unit 81 for exhaust air, which is provided in the other dehumidifier 8. Exhaust air is supplied to the dehumidifiers 8 from the introduction unit 81 through the exhaust-air discharge path L2.

In the exhaust-air discharge path L2, a dust collector 11, a second blower 10B, and a cooler 12 are arranged in sequence, with the dust collector 11 being closest to the drying hopper 2, between the drying hopper 2 and the dehumidifiers 8. The exhaust air discharged from the drying hopper 2 passes through the dust collector 11, the second blower 10B, and the cooler 12, in this order.

The dust collector 11 removes foreign matter from exhaust air flowing through the exhaust-air discharge path L2. The dust collector 11 may be, for example, a cyclone-type dust collector. However, it is not limited to a cyclone-type dust collector, and may be any conventionally known one.

The second blower 10B draws in exhaust air from an inlet port, compresses the exhaust air, and then discharges the compressed exhaust air from an outlet port. The second blower 10B may be a conventionally known one.

The cooler 12 cools exhaust air to be supplied to the dehumidifiers 8 so as to lower the temperature of the exhaust air. The cooler 12 cools humidified air so that the temperature of the humidified air reaches, for example, about 40°C. If the exhaust air discharged from the drying hopper 2 is supplied at a high temperature to the dehumidifiers 8, the efficiency of dehumidifying humidified air in the dehumidifiers 8 decreases. Thus, the exhaust air that is cooled by the cooler 12 is supplied to the dehumidifiers 8 so as to improve the efficiency of dehumidifying the exhaust air in the dehumidifiers 8. Accordingly, low-dew-point air can be efficiently generated in the dehumidifiers 8.

Preferably, the cooler 12 is an air-cooled heat exchanger. Exhaust air is introduced into the cooler 12 through an introduction unit 120 for exhaust air, and outside air is also introduced into the cooler 12 through an introduction unit 122 for outside air. The cooler 12 cools the exhaust air by heat exchange with the outside air. The cooled exhaust air is discharged from an exhaust unit 121 for exhaust air and supplied to the dehumidifiers 8. The outside air takes away thermal energy from the exhaust air by heat exchange with the exhaust air, and in turn, the temperature of the outside air increases. The outside air with an increased temperature as a result of heat exchange with the exhaust air is discharged from an exhaust unit 123 for outside air. A portion of the discharged outside air is supplied as a regenerating gas to the dehumidifiers 8.

The cooler 12 may have any shape and structure, and may be any conventionally known one, as long as it is an air-cooled heat exchanger.

As shown in Fig. 1, the drying device 1 includes an outside-air supply path L3 for supplying outside air to the cooler 12. The outside-air supply path L3 is provided with a second filter device 9B and a third blower 10C on the upstream side of the cooler 12. Outside air passes through the second filter device 9B and the third blower 10C, in this order.

The third blower 10C draws in outside air from an inlet port, compresses the outside air, and then discharges the compressed outside air from an outlet port. The second filter device 9B removes foreign matter from the outside air flowing through the outside-air supply path L3. The second filter device 9B and the third blower 10C may be conventionally known ones.

In the exhaust-air discharge path L2, a temperature sensor 13 is provided between the cooler 12 and the dehumidifiers 8 (on the downstream side of the cooler 12). The temperature sensor 13 measures the temperature of exhaust air to be supplied to the dehumidifiers 8 after it is cooled by the cooler 12. In the present embodiment, the temperature of exhaust air measured by the temperature sensor 13 is monitored by a control unit 14. In other words, the temperature sensor 13 converts the measured temperature into electrical signals and outputs the signals to the control unit 14.

The control unit 14 constantly monitors the temperature of the exhaust air to be supplied to the dehumidifiers 8, and controls the volume of outside air to be supplied from the third blower 10C to the cooler 12 (the airflow volume of the third blower 10C) so that the temperature of the exhaust air remains constant, for example, at 40°C. The control unit 14, for example, uses an inverter to control the rotational number (rotational speed) of the motor built in the third blower 10C according to the temperature of the exhaust air. Accordingly, outside air is supplied to the cooler 12 at a volume corresponding to the temperature of the exhaust air so as to adjust and maintain the temperature of the exhaust air to be supplied to the dehumidifiers 8. The airflow volume of the third blower 10C may also be controlled by adjusting a damper.

In the present embodiment, the drying device 1 includes a temperature-indicating controller (TIC) as the control unit 14. The temperature-indicating controller compares the electrical signal output from the temperature sensor 13 with a target value, performs calculations based on the deviation, and controls the third blower 10C. The control unit 14 may be configured with a general-purpose computer.

As shown in Fig. 1, the drying device 1 includes the dehumidifiers 8. The dehumidifiers 8 dehumidify exhaust air to generate low-dew-point air. The dehumidifiers 8 contain an adsorbent. Exhaust air is introduced into the dehumidifiers 8 from the exhaust-air discharge path L2 through the introduction unit 81. In the dehumidifiers 8, the exhaust air comes into contact with the adsorbent, and the moisture contained in the exhaust air is adsorbed by the adsorbent, whereby the moisture is removed from the exhaust air. Thereby, the exhaust air is dehumidified in the dehumidifiers 8, and low-dew-point air is generated.

The low-dew-point air generated in the dehumidifiers 8 is discharged from the dehumidifiers 8 through the exhaust unit 80 and supplied to the first heater 7A through the dry-air supply path L1. The first heater 7A converts the low-dew-point air into high-temperature and low-dew-point dry air by heating, and the dry air is supplied to the drying hopper 2 through the dry-air supply path L1. Any adsorbent capable of adsorbing moisture from gas may be used. Examples include silica gel, zeolite, activated carbon, and metal-organic frameworks (MOFs).

A regenerating gas is introduced into the dehumidifiers 8 from a regenerating-gas supply path L4 through an introduction unit 83. The regenerating gas comes into contact with the adsorbent in the dehumidifiers 8 and desorbs the moisture adsorbed by the adsorbent, whereby the moisture is removed from the adsorbent. Accordingly, the adsorbent is regenerated in the dehumidifiers 8. The regenerating gas is not particularly limited and may be air at a high temperature of, for example, 200°C to 230°C. The regenerating gas after being used to regenerate the adsorbent in the dehumidifiers 8 (referred to as "used regenerating gas" in the present disclosure) is discharged from the dehumidifiers 8 through exhaust units 82.

The dehumidifiers 8 may have any shape and structure as long as they are configured to generate low-dew-point air by removing moisture contained in the exhaust air by adsorption with the adsorbent, and to regenerate the adsorbent by removing the adsorbed moisture from the adsorbent by desorption with the regenerating gas.

For example, the dehumidifiers 8 are rotary continuous dehumidifiers. The dehumidifiers 8 of this type include a cylindrical adsorption rotor rotatable about a rotation axis. The adsorption rotor includes, for example, an adsorption element having a honeycomb structure. The adsorption element carries an adsorbent. The adsorption rotor is divided into an adsorption zone and a desorption zone along the circumferential direction around the rotation axis, and the adsorption element moves alternately between the adsorption zone and the desorption zone as the adsorption rotor rotates.

Exhaust air is supplied to the adsorption zone of the adsorption rotor. When the exhaust air passes through the adsorption element located in the adsorption zone, the moisture contained in the exhaust air is adsorbed with the adsorbent, whereby the exhaust air is dehumidified. The regenerating gas is supplied to the desorption zone of the adsorption rotor and desorbs the moisture from the adsorbent when passing through the adsorption element located in the desorption zone, whereby the adsorbent is regenerated.

The dehumidifiers 8 are not limited to rotary continuous dehumidifiers, and may be other conventionally known ones.

As shown in Fig. 1, the drying device 1 includes the regenerating-gas supply path L4 for supplying a regenerating gas for regenerating the adsorbent in the dehumidifiers 8 to the dehumidifiers 8. The regenerating gas for use is the outside air with an increased temperature as a result of heat exchange with exhaust air in the cooler 12. The regenerating-gas supply path L4 supplies the outside air discharged from the cooler 12 to the dehumidifiers 8.

One end of the regenerating-gas supply path L4 is connected to the outside-air supply path L3 on the downstream side of the cooler 12. In the present embodiment, the other end of the regenerating-gas supply path L4 branches into two. One branch at the other end of the regenerating-gas supply path L4 is connected to one introduction unit 83 for regenerating gas, which is provided in one of the dehumidifiers 8. The other branch at the other end of the regenerating-gas supply path L4 is connected to the other introduction unit 83 for regenerating gas, which is provided in the other one of the dehumidifiers 8. The outside air discharged from the cooler 12 is supplied as a regenerating gas to the dehumidifiers 8 from the regenerating-gas supply path L4 through the introduction units 83.

In the regenerating-gas supply path L4, a preheater 15 and a third heater 7C are arranged in sequence, with the preheater 15 being closer to the cooler 12, between the cooler 12 and the dehumidifiers 8. The outside air discharged from the cooler 12 is introduced into the dehumidifiers 8 via the preheater 15 and the third heater 7C, in this order.

The third heater 7C heats the outside air discharged from the cooler 12 (the outside air to be supplied as a regenerating gas to the dehumidifiers 8) to increase the temperature of the outside air. The third heater 7C heats the outside air so that the temperature of the outside air reaches, for example, 200°C to 230°C. The third heater 7C may be any conventionally known one.

The preheater 15 preheats the outside air discharged from the cooler 12 (the outside air to be supplied as a regenerating gas to the dehumidifiers 8) to increase the temperature of the outside air. The temperature of the outside air discharged from the cooler 12 is, for example, about 51°C to 56°C. Preheating the outside air with the preheater 15 makes it possible to reduce the amount of thermal energy to be added to the outside air by the third heater 7C.

The preheater 15 is preferably an air-cooled heat exchanger. The outside air discharged from the cooler 12 (the outside air to be introduced as a regenerating gas into the dehumidifiers 8) is introduced into the preheater 15 through an introduction unit 150 for regenerating gas, while the used regenerating gas discharged from the dehumidifiers 8 is introduced the preheater 15 through an introduction unit 152 for used regenerating gas. The used regenerating gas is a regenerating gas after being used to regenerate the adsorbent in the dehumidifiers 8 and has a high temperature (for example, about 160°C). Thus, the preheater 15 preheats the outside air discharged from the cooler 12 by heat exchange with the used regenerating gas at a high temperature. The outside air heated to, for example, 140°C to 150°C is discharged from an exhaust unit 151 for regenerating gas and then further heated by the third heater 7C.

The used regenerating gas is cooled to, for example, about 55°C to 67°C by heat exchange with the outside air discharged from the cooler 12, discharged from an exhaust unit 153 for used regenerating gas, and exhausted to the outside of the system.

The preheater 15 may have any shape and structure, and may be any conventionally known one, as long as it is an air-cooled heat exchanger.

As shown in Fig. 1, the drying device 1 includes a used-regenerating-gas exhaust path L5 for discharging the used regenerating gas discharged from the dehumidifiers 8 to the outside of the system. The used-regenerating-gas exhaust path L5 transports the used regenerating gas discharged from the dehumidifiers 8 to the preheater 15.

One end of the used-regenerating-gas flow path L5is connected to the preheater 15. In the present embodiment, the other end of the used-regenerating-gas flow path L5 branches into two. One branch at the other end of the used-regenerating-gas flow path L5 is connected to one exhaust unit 82 for used regenerating gas, which is provided in one of the dehumidifiers 8. The other branch at the other end of the used-regenerating-gas flow path L5 is connected to the other exhaust unit 82 for used regenerating gas, which is provided in the other one of the dehumidifiers 8. The used regenerating gas from the dehumidifiers 8 flows through the exhaust ports 82 and then the used-regenerating-gas flow path L5.

In the used-regenerating-gas flow path L5, a fourth blower 10D and the preheater 15 are arranged in sequence, with the fourth blower 10D being closer to the dehumidifiers 8. The used regenerating gas discharged from the dehumidifiers 8 passes through the fourth blower 10D and the preheater 15, in this order.

The fourth blower 10D draws in the used regenerating gas from an inlet port, compresses the used regenerating gas, and then discharges the compressed used regenerating gas from an outlet port. The used regenerating gas discharged from the fourth blower 10D is supplied to the preheater 15 and used to preheat the outside air discharged from the cooler 12, as described above. The fourth blower 10D may be any conventionally known one.

The used-regenerating-gas exhaust path L5 includes a branch path L6 connected at a position between the fourth blower 10D and the preheater 15. The branch path L6 is connected to the regenerating-gas supply path L4. The branch path L6 is connected to the regenerating-gas supply path L4 at a position between the preheater 15 and the third heater 7C.

In the branch path L6, a portion of the used regenerating gas discharged from the dehumidifiers 8 is mixed with the outside air discharged from the cooler 12 (the outside air to be supplied as a regenerating gas to the dehumidifiers 8). The temperature of the used regenerating gas is high (for example, about 160°C). Thus, when the used regenerating gas is mixed with the outside air discharged from the cooler 12, the temperature of the outside air increases. This makes it possible to reduce the amount of thermal energy to be added to outside air by the third heater 7C.

As shown in Fig. 1, the drying device 1 includes an exhaust-air supply path L7 for supplying, to the drying hopper 2, a portion of the exhaust air discharged from the drying hopper 2 and flowing through the exhaust-air discharge path L2. One end of the exhaust-air supply path L7 is connected to the exhaust-air flow path L2 on the downstream side of the dust collector 11. The other end of the exhaust-air supply path L7 is connected to the introduction unit 26 in the upper portion of the drying hopper 2. The exhaust-air supply path L7 supplies the exhaust air discharged from the drying hopper 2 as a preheating gas, from the exhaust-air discharge path L2 to the drying hopper 2. The preheating gas is introduced into the upper portion of the drying hopper 2 from the exhaust-air supply path L7 through the introduction unit 26.

The temperature of undried resin pellets to be supplied to the drying hopper 2 is, for example, 20°C to 25°C, and the moisture content thereof is, for example, about 3000 ppm. The exhaust air discharged from the drying hopper 2 has been used to dry the resin pellets in the drying hopper 2 and thus has a lower temperature and a higher humidity than the dry air to be introduced into the drying hopper 2, but still has a relatively high temperature and a relatively low humidity. Thus, when the exhaust air discharged from the drying hopper 2 is introduced into the upper portion of the drying hopper 2, it makes it possible to preheat the resin pellets in the upper portion of the drying hopper 2 to preliminarily increase the temperature of the resin pellets before the resin pellets are fully dried with dry air in the lower portion of the drying hopper 2, and it also makes it possible to initially dry the resin pellets to preliminarily reduce the moisture content of the resin pellets to, for example, about 150 ppm. Accordingly, in the lower portion of the drying hopper 2, the resin pellets are dried to a moisture content of about 50 ppm or less, allowing the amount of thermal energy to be added to the resin pellets to be reduced. Thus, the resin pellets can be dried without requiring a large amount of thermal energy, achieving energy savings.

In the exhaust-air supply path L7, a second heater 7B, a third filter device 9C, and a fifth blower 10E are arranged in sequence, with the second heater 7B being closest to the drying hopper 2. The exhaust air discharged from the drying hopper 2 passes through the fifth blower 10E, the third filter device 9C, and the second heater 7B, in this order from the exhaust-air discharge path L2.

The fifth blower 10E draws in low-dew-point air from an inlet port, compresses the exhaust air, and then discharges the compressed exhaust air from an outlet port. The third filter device 9C removes foreign matter from the exhaust air. The second heater 7B heats the exhaust air. The second heater 7B, the third filter device 9C, and the fifth blower 10E can be conventionally known ones.

In the present embodiment, a portion of the exhaust air discharged from the drying hopper 2 is first heated in the second heater 7B and then returned to the drying hopper 2. However, it is not always necessary to heat a portion of the exhaust air discharged from the drying hopper 2 before it is returned to the drying hopper 2. The portion may be returned to the drying hopper 2 without being heated.

For example, after being used to preheat the resin pellets in the drying hopper 2, the exhaust air is discharged from the drying hopper 2 through the exhaust unit 25 at the upper portion of the drying hopper 2.

In the above-described drying device 1 shown in Fig. 1, in the lower portion of the drying hopper 2, the high-temperature and low-dew-point dry air heats synthetic resin molding materials such as resin pellets, whereby the synthetic resin molding materials are dried, with the moisture removed. The dried synthetic resin molding materials in the lower portion of the drying hopper 2 are discharged from the drying hopper 2 through the discharge unit 21 in the lower portion of the drying hopper 2 and transported to the resin molding machine 6. Synthetic resin molding materials are replenished to the lower portion of the drying hopper 2 from the upper portion of the drying hopper 2. Because of the dry air introduced by the second introduction unit 24 to the lowest portion of the drying hopper 2, the temperature drop of the dried synthetic resin molding materials in the lower portion of the drying hopper 2 is suppressed. Thus, the dried synthetic resin molding materials at a high temperature are discharged from the drying hopper 2 and transported to the resin molding machine 6. Accordingly, the drying device 1 of the present embodiment can supply synthetic resin molding materials from which the moisture has been removed to the resin molding machine 6.

In the drying device 1 shown in Fig. 1, a portion of the exhaust air that is discharged from the drying hopper 2 after drying the synthetic resin molding materials is supplied to the dehumidifiers 8 through the exhaust-air discharge path L2, dehumidified in the dehumidifiers 8, supplied to the drying hopper 2, and again used to dry the synthetic resin molding materials. Meanwhile a portion of the exhaust air that is discharged from the drying hopper 2 is supplied to the upper portion of the drying hopper 2 through the exhaust-air supply path L7.

The exhaust air supplied to the drying hopper 2 moves upward in the upper portion of the drying hopper 2 together with the dry air that moves upward from the lower portion of the drying hopper 2, and preheats and initially dries undried synthetic resin molding materials accumulated in the upper portion of the drying hopper 2. Thus, the synthetic resin molding materials with an increased temperature and a reduced moisture content due to preheating and initial drying are supplied from the upper portion of the drying hopper 2.

As described above, in the drying device 1 shown in Fig. 1, a portion of the exhaust air that is discharged from the drying hopper 2 is returned to the upper portion of the drying hopper 2. Thus, the thermal energy of the exhaust air is not wasted, but is effectively used for preheating and initial drying of the synthetic resin molding materials. Accordingly, in the lower portion of the drying hopper 2, while the synthetic resin molding materials are dried by heating, the amount of thermal energy required to dry the synthetic resin molding materials can be reduced. Thus, the synthetic resin molding materials can be dried without requiring a large amount of thermal energy, achieving energy savings.

In the drying device 1 shown in Fig. 1, a portion of the exhaust air that is discharged from the drying hopper 2 is returned to the upper portion of the drying hopper 2. This makes it possible to reduce thermal load during generation of dry air, for example, by cooling, dehumidifying, and heating of the exhaust air by the cooler 12, the dehumidifiers 8, the first heater 7A, etc. Thus, the thermal energy required to generate dry air can be reduced, achieving energy savings.

In the drying device 1 shown in Fig. 1, even when synthetic resin molding materials are dried in a low temperature range (for example, 110°C or higher and 140°C or lower) that is less likely to cause changes in physical properties of the synthetic resin molding materials in the lower portion of the drying hopper 2, the synthetic resin molding materials with an increased temperature and a reduced moisture content due to preheating and initial drying in the lower portion of the drying hopper 2 are supplied from the upper portion of the drying hopper 2, making it possible to reduce the time required to dry the synthetic resin molding materials compared with before. As described above, in the drying device 1 shown in Fig. 1, even when synthetic resin molding materials are dried in a low temperature range (for example, 110°C or higher and 140°C or lower), the synthetic resin molding materials can be dried in a short time. Even if some abnormality occurs in the drying device 1 during drying of the synthetic resin molding materials and the synthetic resin molding materials remain in the drying hopper 2, it is possible to suppress changes in physical properties of the synthetic resin molding materials.

In the drying device 1 shown in Fig. 1, the first heater 7A that heats dry air (low-dew-point air) to be supplied to the lower portion of the drying hopper 2 and the second heater 7B that heats exhaust air to be supplied to the upper portion of the drying hopper 2 are independently present, allowing the temperature of the dry air and the temperature of the exhaust air to be independently set. Accordingly, in the lower portion of the drying hopper 2, the synthetic resin molding materials can be prevented from being excessively dried, and dried synthetic resin molding materials at a temperature according to molding conditions of the resin molding machine 6 can be easily obtained.

The above has described an embodiment of the drying device of the present disclosure; however, the drying device of the present disclosure is not limited to the embodiment shown in Fig. 1, and various modifications can be made without departing from the spirit of the present disclosure. For example, the following modifications can be made. Furthermore, the features of the following modified examples can be appropriately combined.

For example, in the above embodiment, the drying device 1 includes two dehumidifiers 8. In one modified example, the drying device 1 may include a single dehumidifier 8 or three more dehumidifiers 8.

In the above embodiment, the drying device 1 includes the second filter device 9B, and foreign matter is removed from the outside air by the second filter device 9B before the outside air is introduced into the cooler 12. In one modified example, the drying device 1 does not necessarily include the second filter device 9B.

In the above embodiment, the drying device 1 includes a circulation flow path L6, and a portion of the used regenerating gas to be discharged from the dehumidifiers 8 is mixed with outside air (the outside air to be supplied as a regenerating gas to the dehumidifiers 8) to be discharged from the cooler 12. In one modified example, the drying device 1 does not necessarily include the circulation flow path L6, and the used regenerating gas discharged from the dehumidifiers 8 may be entirely introduced into the preheater 15 before being exhausted to the outside of the system.

In the above embodiment, the drying device 1 includes the preheater 15, and the outside air to be discharged from the cooler 12 (the outside air to be supplied as a regenerating gas to the dehumidifiers 8) is preheated by heat exchange with the used regenerating gas discharged from the dehumidifiers 8 before being supplied to the third heater 7C. In one modified example, the drying device 1 does not necessarily include the preheater 15, and the outside air discharged from the cooler 12 (the outside air to be supplied as a regenerating gas to the dehumidifiers 8) may be supplied to the third heater 7C without being preheated. In this modified example, a portion of the used regenerating gas discharged from the dehumidifiers 8 may be mixed with the outside air discharged from the cooler 12 (the outside air to be supplied as a regenerating gas to the dehumidifiers 8) through the circulation flow path L6, or the used regenerating gas discharged from the dehumidifiers 8 may be entirely exhausted to the outside of the system.

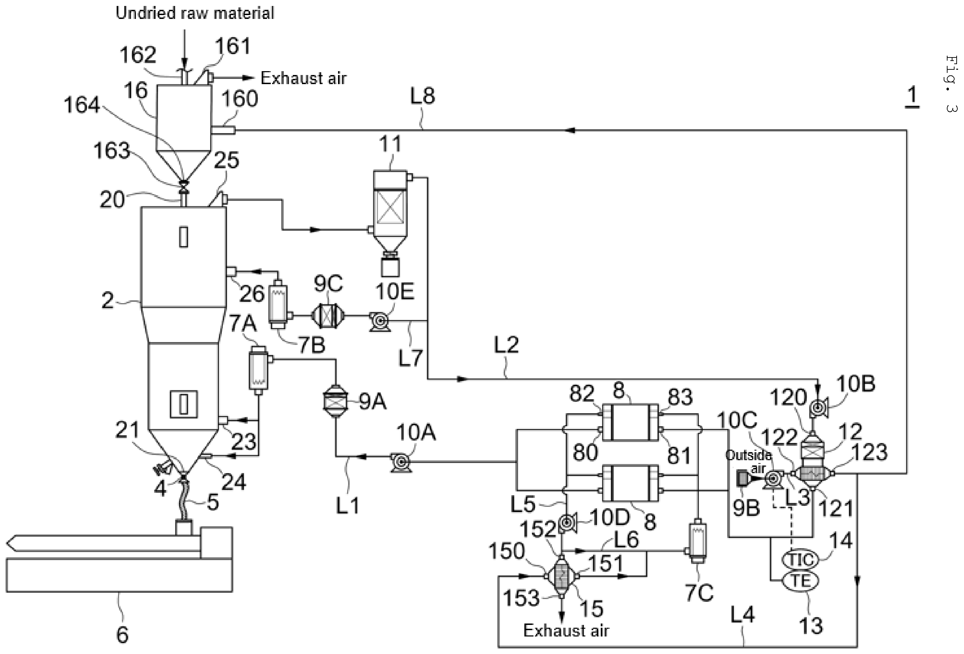

In the above embodiment, a portion of the outside air discharged from the cooler 12 is discharged to the outside of the system, and the portion is supplied as a regenerating gas to the dehumidifiers 8. In one modified example, a portion of the outside air discharged from the cooler 12 is supplied as a regenerating gas to the dehumidifiers 8 and the portion may be supplied as a preheating gas to a storage hopper 16 as shown in Fig. 3.

The drying device 1 shown in Fig. 3 includes the storage hopper 16 configured to temporarily store resin pellets. The storage hopper 16 is provided above the drying hopper 2. The storage hopper 16 has an internal space capable of storing resin pellets supplied from a raw material tank through a supply pipe 162. The resin pellets supplied from the raw material tank are undried resin pellets. The resin pellets are supplied to the storage hopper 16 from a supply unit provided in an upper portion the storage hopper 16. A lower portion of the storage hopper 16 has a cone or quadrilateral pyramid shape. The storage hopper 16 includes an outlet unit 164 for resin pellets at its lower end. The resin pellets in the storage hopper 16 are supplied from the outlet unit 164 to the drying hopper 2 upon opening of a solenoid valve 163, for example.

The resin pellets are preheated while being stored in the storage hopper 16. The storage hopper 16 includes an introduction unit 160 configured to introduce a preheating gas for preheating the resin pellets in the storage hopper 16 into the storage hopper 16. The storage hopper 16 also includes a discharge unit 161 at a position above the introduction unit 160, the discharge unit 161 being configured to discharge, from the storage hopper 16, the preheating gas that has been used to preheat the resin pellets in the storage hopper 16.

The preheating gas for use is the outside air with an increased temperature as a result of heat exchange with exhaust air in the cooler 12. At least a portion of the outside air discharged from the cooler 12 is supplied to the storage hopper 16 through a preheating gas flow path L8. One end of the preheating gas flow path L8 is connected to an outside air flow path L3 on the downstream side of the cooler 12. The other end of the preheating gas flow path L8 is connected to the introduction unit 160 of the storage hopper 16. The resin pellets in the storage hopper 16 are preheated by the preheating gas and supplied at an increased temperature to the drying hopper 2.

As described above, in the drying device 1 shown in Fig. 3, the outside air discharged from the cooler 12 is supplied as a preheating gas to the storage hopper 16. Thus, the thermal energy collected from the exhaust air along with cooling of the exhaust gas in the cooler 12 is not wasted, but is effectively used for preheating synthetic resin molding materials, such as resin pellets. Accordingly, in the drying hopper 2, while the synthetic resin molding materials are dried by heating, the amount of thermal energy required to dry the synthetic resin molding materials can be reduced. Thus, the synthetic resin molding materials can be dried without requiring a large amount of thermal energy, achieving energy savings.

In the drying device 1 shown in Fig. 3, the outside air discharged from the cooler 12 may be entirely supplied as a preheating gas to the storage hopper 16, and outside air that is different from the outside air discharged from the cooler 12 may be introduced as a regenerating gas into the dehumidifiers 8.

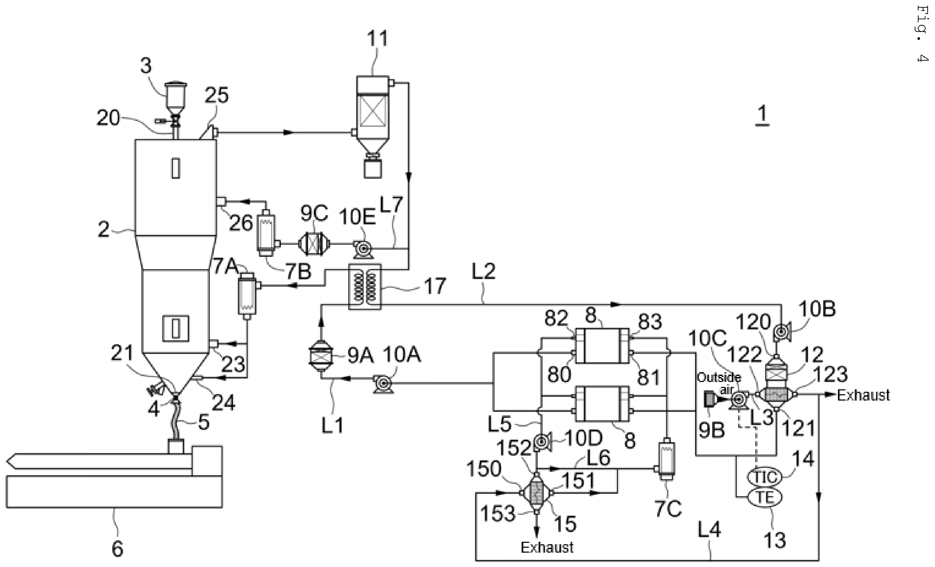

In another modified example, the drying device 1 shown in Fig. 4 may include a heat exchanger 17 for exchanging heat between low-dew-point air supplied from the dehumidifiers 8 and exhaust air discharged from the drying hopper 2.

The temperature of the low-dew-point air supplied from the dehumidifiers 8 is, for example, about 55°C. The low-dew-point air is heated in the first heater 7A before being supplied to the drying hopper 2. The temperature of the exhaust air discharged from the drying hopper 2 is relatively high. Thus, the low-dew-point air supplied from the dehumidifiers 8 is heated in the heat exchanger 17 by heat exchanged with the exhaust air discharged from the drying hopper 2, whereby the low-dew-point air at an increased temperature can be supplied to the first heater 7A.

The low-dew-point air takes away thermal energy from the exhaust air by heat exchange, whereby the temperature increases to, for example, about 60°C to 70°C. Accordingly, in the drying device 1 shown in Fig. 4, the amount of thermal energy to be added to the low-dew-point air in the first heater 7A can be reduced, and the thermal energy of the exhaust air discharged from the drying hopper 2 is not wasted, but is effectively used to generate dry air. Thus, the drying device 1 shown in Fig. 4 can effectively reduce energy loss and improve energy efficiency.

The exhaust air to be supplied to the heat exchanger 17 may be exhaust air before passing through the dust collector 11, but is preferably exhaust air after passing through the dust collector 11. The low-dew-point air to be supplied to the heat exchanger 17 may be low-dew-point air before passing through the first filter device 9A, but is preferably low-dew-point air after passing through the first filter device 9A.

### Description of Reference Numerals

- 1: drying device
- 2: drying hopper
- 7A: first heater (generation unit)
- 7B: second heater
- 8: dehumidifier (generation unit)
- L1: dry-air supply path
- L2: exhaust-air discharge path
- L7: exhaust-air supply path

## Claims

1. A drying device comprising:
a drying hopper configured to accommodate synthetic resin molding materials introduced from an upper portion of the drying hopper and to discharge the synthetic resin materials from a lower portion of the drying hopper;
a generation unit configured to generate dry air for drying the synthetic resin molding materials in the drying hopper;
a dry-air supply path for supplying the dry air to the drying hopper;
an exhaust-air discharge path for discharging from the drying hopper the dry air used to dry the synthetic resin molding materials in the drying hopper;
an exhaust-air supply path for supplying a portion of exhaust air flowing through the exhaust-air flow path to the drying hopper; and
a heater provided at the exhaust-air discharge path and configured to heat the exhaust air to be supplied to the drying hopper,
wherein
the drying hopper comprises a dry-air introduction unit in the lower portion thereof, the dry-air introduction unit being configured to introduce the dry air from the dry-air supply path, and the drying hopper also comprises an exhaust-air introduction unit in the upper portion thereof, the exhaust-air introduction unit being configured to introduce the exhaust air from the exhaust-air supply path, and
in the drying hopper, the exhaust-air introduction unit is located above the dry-air introduction unit.

2. The drying device according to claim 1, wherein the generation unit comprises a dehumidifier configured to generate low-dew-point air and a heater configured to convert the low-dew-point air into the dry air by heating.

3. The drying device according to claim 1, wherein the temperature of the dry air to be supplied to the drying hopper is 120°C or higher and 130°C or lower.
